# EUROPÄISCHE PATENTANMELDUNG

(11) **EP 3 919 309 A1**
(43) Veröffentlichungstag der Anmeldung: **08.12.2021**
(21) Anmeldenummer: 21186870.8
(22) Anmeldetag: 24.06.2016
(51) Int. Cl.: B60K 37/06, G06F 3/01

(54) **FUNKTIONSAUSWAHL ÜBER GESTIK-STEUERUNG MIT HAPTISCHER RÜCKMELDUNG**

(30) Priorität: 11.07.2015 DE 102015009031
(62) Teilanmeldung aus: 16001429.6
(71) Anmelder: MAN Truck & Bus SE, 80995 München (DE)
(72) Erfinder: Adlhart, Helmut, 81825 München (DE); Eisner, Johannes, 81371 München (DE); Fritz, Maria, 80637 München (DE); Glohr, Tobias, 80336 München (DE); Mohra, Holger, 85567 München (DE); Wahn, Nina Alexandra, 82140 Olching (DE); Wenninger, Dominik, 84576 Teising (DE); Wölfel, Christiane, 81539 München (DE); Zipf, Christoph, 97922 Gerlachsheim (DE)
(74) Vertreter: v. Bezold & Partner Patentanwälte - PartG mbB

(57) **Zusammenfassung**

Die Erfindung betrifft ein Verfahren zur Anwendung in einem Fahrzeug (F), insbesondere zur über Gestik (1) berührungslosen Bedienung einer Fahrzeugeinrichtung, wobei eine Gestik (1) einer Person (2) zur berührungslosen Betätigung einer Fahrzeugeinrichtung erfasst wird und zu der Gestik (1) zumindest ein haptisches Feedback (3) für die Person (2) erzeugt wird, vorzugsweise um zumindest einen Teil der Betätigung haptisch zu begleiten, und/oder der Person (2) eine Information haptisch übermittelt wird, welche Gestik (1) zur berührungslosen Betätigung der Fahrzeugeinrichtung auszuführen ist. Die Erfindung umfasst ebenfalls eine zugehörige Vorrichtung.

## Beschreibung

Die Erfindung betrifft ein Verfahren zur Anwendung in einem Fahrzeug, vorzugsweise einem Kraftfahrzeug, insbesondere einem Nutzfahrzeug, z. B. einem Lastkraftwagen oder einem Omnibus. Das Verfahren dient insbesondere zur durch Gestik-Steuerung berührungslosen Bedienung (z. B. Betätigung, Funktionsauswahl, Funktionsaktivierung, etc.) einer Fahrzeugeinrichtung. Die Erfindung betrifft ebenfalls eine entsprechende Vorrichtung.

Als einfache Möglichkeit der Bedienung hält die Gestensteuerung allmählich Einzug in Kraftfahrzeuge. Hierzu wird z. B. auf die DE 10 2009 057 739 A1 verwiesen. Bei der Gestensteuerung werden einzelne Funktionen im Kraftfahrzeug mittels bestimmter Finger- oder Handgesten ausgewählt, was etliche Vorteile mit sich bringt, z. B. den Fahrzeugführer (Bediener) kaum von seiner zentralen Aufgabe, dem Fahren des Kraftfahrzeugs, ablenkt. Allerdings erhält der Fahrzeugführer bei der Gestensteuerung in der Luft, also ohne physischen Kontakt mit einem Bedienelement, kein direktes Feedback, also kein Feedback am Finger oder an der Hand, sondern allenfalls ein indirektes Feedback über beispielsweise Anzeigen auf einem Display. Ein weiterer Nachteil ist, dass der Fahrzeugführer nicht wahrnehmen kann, welche möglichen Gesten für die Gestensteuerung zur Verfügung stehen, anders als beispielsweise bei einem Touch-Display, bei welchem verschiedene Buttons zur Verfügung stehen und ausgewählt werden können.

Eine Aufgabe der Erfindung ist es, eine Möglichkeit zu schaffen, mittels der die Gestik-Steuerung in einem Fahrzeug verbessert werden kann, z. B. um die Nutzerakzeptanz zu steigern.

Diese Aufgabe kann mit den Merkmalen der unabhängigen Ansprüche gelöst werden. Vorteilhafte Weiterbildungen der Erfindungen können den Unteransprüchen und der folgenden Beschreibung bevorzugter Ausführungsformen der Erfindung entnommen werden.

Die Erfindung schafft ein Verfahren zur Anwendung in einem Fahrzeug, vorzugsweise einem Kraftfahrzeug, insbesondere einem Nutzfahrzeug, z. B. einem Lastkraftwagen oder einem Omnibus. Das Verfahren ist insbesondere zur durch Gestik-Steuerung berührungslosen Betätigung, insbesondere Bedienung, einer Fahrzeugeinrichtung (z. B. eine Audio-Einrichtung, ein Schiebedach, ein Warnblinker, ein Fahrzeugfenster, eine Fahrzeugtüre, ein Schaltelement, etc.) ausgeführt.

Das Verfahren zeichnet sich insbesondere dadurch aus, dass eine Gestik einer Person (z. B. Fahrzeugführer und/oder Bedienperson) zur berührungslosen Betätigung einer Fahrzeugeinrichtung erfasst wird (z. B. über ein Kamerasystem oder ein anderes geeignetes Erfassungsmodell) und zu der Gestik zumindest ein haptisches Feedback, also zumindest eine haptische Rückmeldung, für die Person erzeugt wird, um vorzugsweise zumindest einen Teil der Betätigung, also insbesondere der Gestik, haptisch und somit zweckmäßig spürbar zu begleiten. Dadurch kann zweckmäßig ein virtuelles Bedienelement (z. B. ein virtueller Taster) geschaffen werden und/oder eine Betätigung eines physischen, insbesondere mechanischen bzw. realen, Bedienelements (z. B. eines Tasters) haptisch imitiert werden. Alternativ oder ergänzend kann bei dem Verfahren der Person vorzugsweise haptisch eine Information übermittelt werden, vorzugsweise zur intuitiven Anleitung (z. B. Erklärung, Aufzeigen, Klarmachung, etc.), welche Gestik zur berührungslosen Betätigung der Fahrzeugeinrichtung auszuführen ist und somit zweckmäßig hinterlegt ist.

Die Gestik kann eine oder mehrere Gesten umfassen.

Die Gestik ist vorzugsweise eine Hand- und/oder Fingergestik, z. B. eine Schiebe-, Wisch- und/oder Fingertipp-Gestik.

Die Gestik entspricht insbesondere zumindest abschnittsweise der Betätigung. So kann z. B. eine Beendigung der Gestik zugleich eine Beendigung der Betätigung entsprechen.

Die berührungslose Betätigung kann z. B. eine Bedienung, eine Auswahl einer Funktion und/oder eine Aktivierung einer Funktion einer Fahrzeugeinrichtung umfassen.

Die berührungslose Betätigung umfasst insbesondere eine Betätigung ohne physischen Kontakt der Person, insbesondere deren Hand, mit einem physischen und/oder mechanischen Bedienelement.

Das haptische Feedback kann ein einzelnes haptisches Feedback oder mehrere haptische Feedbacks umfassen, z. B. zeitgleich und/oder nacheinander ausgeführte Feedbacks.

Ein haptisches Feedback wird zweckmäßig während der Gestik der Person ausgeführt.

Es ist ebenfalls möglich, dass ein haptisches Feedback bei Beendigung der Betätigung und/oder zweckmäßig unmittelbar danach erfolgt.

Ein haptisches Feedback kann zweckmäßig zu Beginn der Betätigung erfolgen, z. B. als Startsignal.

Während der Gestik der Person können vorzugsweise unterschiedliche haptische Feedbacks für die Person ausgeführt werden, die z. B. zeitgleich erfolgen und sich zweckgemäß überlagern können und/oder nacheinander erfolgen können.

Es ist möglich, dass ein haptisches Feedback während der Gestik variiert und sich somit zweckmäßig verändert.

Es ist möglich, dass ein haptisches Feedback über eine erfolgreiche Ausführung der Gestik und somit zweckmäßig über eine erfolgreiche Betätigung der Fahrzeugeinrichtung erzeugt wird und dadurch zweckmäßig die Person hierüber haptisch informiert wird.

Es ist möglich, dass ein haptisches Feedback einen Kraft-Weg-Verlauf und/oder eine Betätigung eines physischen, quasi realen und/oder mechanischen Bedienelements, haptisch imitiert, z. B. mittels einer Gegenkraft. Dazu kann insbesondere zumindest ein Luftstrom genutzt werden, der vorzugsweise so gestaltet ist, dass ein Kraft-Weg-Verlauf und/oder eine Betätigung eines physischen Bedienelements haptisch imitiert werden.

Insbesondere kann ein Luftstrom als haptisches Feedback im Wesentlichen entgegen der Richtung der Bewegung der Person, insbesondere deren Hand, während der Gestik ausgeführt werden, so dass insbesondere eine Gegenkraft erzeugt werden kann, zweckmäßig analog der Gegenkraft beim Drücken eines physischen (realen bzw. mechanischen) Bedienelements. Alternativ oder ergänzend kann ein Luftstrom als haptisches Feedback im Wesentlichen in Richtung der Gestik-Bewegung der Person, insbesondere deren Hand, erzeugt werden, wodurch z. B. ein Nachlaufen, z. B. ein Rückspringen und/oder Rückbewegen, eines physischen (realen bzw. mechanischen) Bedienelements haptisch imitiert werden kann. Dadurch kann vorzugsweise die Betätigung eines (echten bzw. physischen) Bedienelements, insbesondere Tasters, haptisch imitiert werden.

Im Rahmen der Erfindung kann das Merkmal Feedback nicht nur ein Feedback in Form einer Rückmeldung umfassen, sondern vorzugsweise auch eine Führung bzw. Beeinflussung der Gestik der Person.

So ist es z. B. möglich, dass ein Luftstrom insbesondere als haptisches Feedback zur Führung der Hand der Person während der Gestik und/oder zur aktiven Beeinflussung der Gestik ausgeführt wird, wodurch haptisch korrigierend oder hilfestellungsleistend in die Betätigung eingegriffen werden kann.

Der hierin offenbarte Luftstrom kann einen stetigen, insbesondere kontinuierlichen Luftstrom und/oder einen oder mehrere Luftstöße umfassen.

Der Luftstrom kann als sich verändernder Luftstrom ausgebildet werden.

Der Luftstrom ist vorzugsweise ein stetiger, aber sich veränderlicher Luftstrom.

Luftströme können zeitgleich ausgeführt werden und sich somit zweckmäßig überlagern und/oder nacheinander ausgeführt werden.

Ein Luftstrom kann sich z. B. kontinuierlich verändern. Alternativ oder ergänzend kann ein Luftstrom intermittierend ausgeführt werden, z. B. mittels mehrerer nacheinander erfolgender Luftstöße.

Der Luftstrom kann zumindest eine Schwelle, zweckmäßig zumindest einen Hoch- und/oder Tiefpunkt, umfassen.

Es ist möglich, dass ein Luftstrom seine Stärke, seine Richtung (z. B. auf und ab, von links nach rechts oder umgekehrt, von vorne nach hinten oder umgekehrt, etc. oder eine Kombination hiervon) und/oder seine Temperatur ändert.

Es ist möglich, dass allgemein ein haptisches Feedback eine Temperaturänderung umfasst, z. B. eine Änderung der Temperatur eines Fahrzeugsitzes, eines Lenkrads oder eines anderen Fahrzeuginnenteils. Das haptische Feedback kann somit zweckmäßig mit unterschiedliche Temperaturbereichen arbeiten.

Es ist möglich, dass ein haptisches Feedback über ein Magnetfeld erzeugt wird: In diesem Fall hätte die Person ein z. B. metallisches, ferromagnetisches und/oder magnetisches Teil zu tragen, vorzugsweise an der Hand, einem Finger oder am Arm.

Zuvor wurde bereits erwähnt, dass für die Person eine Information haptisch zur Verfügung gestellt werden kann, welche Gestik zur berührungslosen Betätigung, insbesondere Bedienung, der Fahrzeugeinrichtung auszuführen ist. Die Information kann zweckmäßig intuitiv erfolgen, z. B. Luftstrom nach links, auszuführende Gestik-Bewegung nach rechts, Luftstrom nach links, auszuführende Gestik-Bewegung nach links, etc.

Die Information an die Person wird haptisch übermittelt, insbesondere mittels zumindest eines Luftstroms. Die Information kann grundsätzlich wie das haptische Feedback ausgeführt werden, so dass die Offenbarung zum haptischen Feedback sinngemäß auch für die haptische Information gilt und insoweit ebenfalls zweckmäßig beanspruchbar ist.

Die Information kann zusätzlich zum zumindest einen Luftstroms allerdings auch mittels akustischer Sprachausgabe erfolgen und/oder visuell, zweckmäßig auf einem Display, z. B. mittels eines oder mehrerer Bilder oder sogar eines Films.

Die Anforderung der Information kann über eine Gestik der Person und/oder über eine akustische Spracheingabe der Person erfolgen.

Zusätzlich und somit als Ergänzung zu dem haptischen Feedback kann ein Geräusch-Feedback, z. B. ein Klick-Geräusch, zweckmäßig ähnlich einem mechanischen Bedien- und/oder Tasterelement, ein Sprachausgabe-Feedback und/oder ein visuelles Feedback, z. B. auf einem Display erzeugt werden.

Das haptische Feedback und/oder die haptische Information sind insbesondere auf die Hand der Person gerichtet.

Die Erfindung ist nicht auf ein Verfahren beschränkt, sondern umfasst auch eine Vorrichtung für ein Fahrzeug, z. B. ein Kraftfahrzeug, insbesondere ein Nutzfahrzeug, wie etwa einen Lastkraftwagen oder einen Omnibus. Die Vorrichtung dient vorzugsweise zur durch Gestik-Steuerung berührungslosen Bedienung einer Fahrzeugeinrichtung und/oder zur Durchführung des Verfahrens wie hierin offenbart.

Die Vorrichtung umfasst zweckgemäß mehrere Einrichtungen, die zur Ausführung des Verfahrens wie hierin offenbart ausgeführt sind. Sie umfasst somit eine Einrichtung, ausgeführt, um eine Gestik einer Person zur berührungslosen Betätigung einer Fahrzeugeinrichtung zu erfassen, und eine Einrichtung, ausgeführt, um zu der Gestik zumindest ein haptisches Feedback für die Person zu erzeugen, und/oder eine Einrichtung, ausgeführt, um der Person eine Information haptisch zu übermitteln, vorzugsweise zur intuitiven Anleitung (z. B. Erklärung, Aufzeigen, Klarmachung, etc.), welche Gestik zur berührungslosen Betätigung der Fahrzeugeinrichtung auszuführen ist und somit insbesondere hinterlegt ist.

Weitere Vorrichtungsmerkmale ergeben sich aus der Offenbarung zum Verfahren, auf die verwiesen wird, um Wiederholungen zu vermeiden.

Die hierin zum Verfahren gemachte Offenbarung bzw. Beschreibung gilt sinngemäß auch für die Vorrichtung und ist insoweit ebenfalls zweckmäßig beanspruchbar.

Die Erfindung umfasst ferner ein Fahrzeug mit einer Vorrichtung wie hierin offenbart.

Das Fahrzeug kann ein Kraftfahrzeug sein, vorzugsweise ein Nutzfahrzeug, insbesondere ein Lastkraftwagen oder Omnibus.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: illustriert ein Verfahren mit einer Gestik zur Bedienung eines Schiebedachs und haptischem Feedback gemäß einer Ausführungsform der Erfindung,
- Figur 2: illustriert ein Verfahren mit einer Gestik zur Bedienung eines Warnblinkers und haptischem Feedback gemäß einer Ausführungsform der Erfindung,
- Figur 3: illustriert ein Verfahren mit einer Gestik zur Bedienung einer Audio-Einrichtung und haptischem Feedback gemäß einer Ausführungsform der Erfindung,
- Figur 4: illustriert eine Gestik und ein haptisches Feedback gemäß einer Ausführungsform der Erfindung;
- Figur 5: illustriert eine Gestik und ein haptisches Feedback gemäß einer anderen Ausführungsform der Erfindung, und
- Figur 6: illustriert eine Gestik und ein haptisches Feedback gemäß einer wiederum anderen Ausführungsform der Erfindung.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Figuren bzw. Ausführungsformen verwiesen wird, um Wiederholungen zu vermeiden.

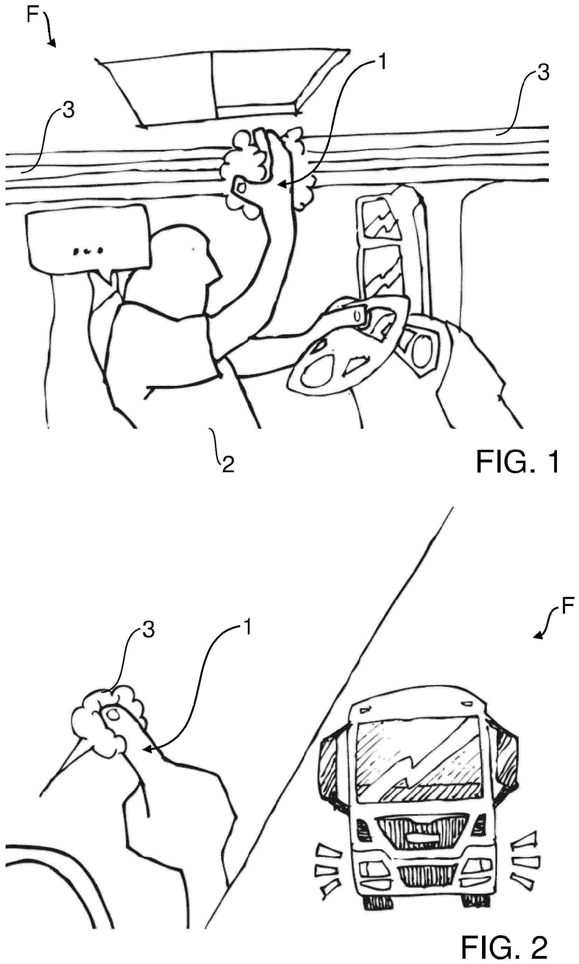

Figur 1 illustriert ein Verfahren zur Anwendung in einem Fahrzeug F gemäß einer Ausführungsform der Erfindung. Das Verfahren dient zur durch Gestensteuerung berührungslosen Bedienung einer Fahrzeugeinrichtung in Form eines Schiebedachs.

Mittels einer Hand-Gestik 1 einer Bedienperson 2, nämlich vorzugsweise des Fahrzeugführers, wird das Schiebedach berührungslos betätigt, z. B. zum Öffnen und Schließen.

Zu der Gestik 1, also insbesondere auf die Gestik 1 hin, und insbesondere während der Gestik 1 wird ein haptisches Feedback 3 in Form zweier in entgegengesetzte Richtungen gerichteter Luftströme auf die die Gestik 1 ausführende Hand der Bedienperson 2 erzeugt.

Darüber hinaus kann der Bedienperson 2 ein haptisches Feedback 3 in Form eines kurzen Luftstoßes gegeben werden, welches über die erfolgreiche Ausführung der Gestik 1 bzw. die erfolgreiche Betätigung, z. B. Auslösung und/oder Beendigung der Funktion, informiert.

Im Speziellen kann die Bedienperson 2 zur berührungslosen Bedienung des Schiebedachs ihre Hand im Wesentlichen senkrecht nach oben in Richtung Schiebedach führen und dann im Wesentlichen waagrecht nach vorne oder hinten zum Öffnen oder Schließen des Schiebedachs. Die Gestik 1 umfasst somit zwei Gesten bzw. eine 2-stufige Geste.

Während der zweiten Geste nach vorne oder hinten wird ein kontinuierlicher Luftstrom als Gegenkraft und haptisches, spürbares Feedback 3 auf die Hand der Bedienperson 2 erzeugt, mit dem Vorteil, dass die Geste "erfahrbarer" wird und die Bedienperson 2 ein Feedback während der Ausführung der Gestik 1 bzw. der Betätigung erhält.

Am Ende der Gestik 1 bzw. an der Stelle, an der die Funktion ausgelöst oder beendet wird, kann ein zusätzliches Feedback 3 z. B. in Form eines kurzen Luftstoßes erzeugt werden, das darüber informiert, dass die Betätigung erfolgreich war und/oder die Funktion erfolgreich ausgeführt wurde.

Die Bedienperson 2 kann des Weiteren einen kontinuierlichen Luftstrom erfahren und an der Stelle, an der die Funktion ausgelöst wird, ein zusätzliches haptisches Feedback 3 erhalten. So kann eine Art Kraft-Weg-Verlauf ähnlich dem eines physischen, mechanischen und somit realen Tasters modelliert werden.

Dadurch kann die berührungslose Betätigung haptisch spürbar gestaltet werden und zwar vorzugsweise so, dass eine Betätigung eines physischen, mechanischen und somit realen Bedienelements, insbesondere Tasters, haptisch imitiert wird. Der oder die Luftströme können zur Imitation der Betätigung modelliert werden, z. B. durch Variation, insbesondere sich veränderlicher Luftstromstärke, Überlagerung und/oder Abfolge von Luftströmen, etc.

Ferner kann eine Logik verwendet werden, die beispielsweise erkennt, wenn das Schiebedach bereits komplett geschlossen ist, die Bedienperson 2 aber dennoch die "Schließen-Geste" ausführt, wobei dann ein weiteres haptisches Feedback 3, z. B. ein Luftstoß, erzeugt werden kann, um die Bedienperson 2 hierüber haptisch zu informieren.

Ist die Bedienperson 2 zunächst im Ungewissen, wie das Schiebedach über eine Gestik 1 bedienbar ist, kann sie eine Information hierüber anfordern, also eine Information, welche Gestik 1 zur Bedienung des Schiebedachs auszuführen ist. Dazu kann die Bedienperson 2 ihre Hand zum Schiebedach führen und z. B. mittels Spracheingabe die Information anfordern. Daraufhin kann der Bedienperson 2 haptisch, z. B. mittels eines oder mehrere Luftströme, vermittelt werden, welche Gestik 1 zur berührungslosen Betätigung des Schiebedachs auszuführen ist. So könnte z. B. ein Luftstrom nach vorne erzeugt werden, um der Bedienperson 2 intuitiv zu zeigen, dass eine Handbewegung nach hinten eine Geste ist, um das Schiebedach zu öffnen.

Es ist sogar möglich, dass ein haptisches Feedback 3, vorzugsweise ein Luftstrom, zur Führung der Hand der Bedienperson 2 während der Gestik 1 und zur aktiven Beeinflussung der Gestik 1 genutzt wird, so dass haptisch korrigierend und hilfestellungsleistend in die Gestik 1 bzw. die Betätigung eingegriffen werden kann. Das Merkmal Feedback ist somit im Rahmen der Erfindung breit auszulegen.

Figur 2 illustriert ein Verfahren zur Anwendung in einem Fahrzeug F gemäß einer anderen Ausführungsform der Erfindung. Das Verfahren dient zur durch Gestensteuerung berührungslosen Bedienung einer Fahrzeugeinrichtung in Form eines Warnblinkers.

Die Bedienperson 2 kann durch ein Fingertippen als Gestik 1, analog der Betätigung beim Drücken eines mechanischen, physischen Tasters, den Warnblinker auslösen oder deaktivieren.

Die Bedienperson 2 kann während der Gestik 1 einen kontinuierlichen Luftstrom als haptisches Feedback 3 erfahren und an der Stelle, an der die Funktion ausgelöst wird, ein zusätzliches Feedback 3. Dadurch kann eine Art Kraft-Weg-Verlauf ähnlich dem eines echten, physischen Tasters modelliert werden, um eine Betätigung eines echten, physischen Bedienelements haptisch zu imitieren. Zur Unterstützung des Eindrucks des virtuellen Tasters bzw. der haptischen Imitation könnte zusätzlich zu einer Schwelle im Luftstrom ein Klickgeräusch, wie z. B. bei einem physischen, mechanischen Taster, ausgegeben werden.

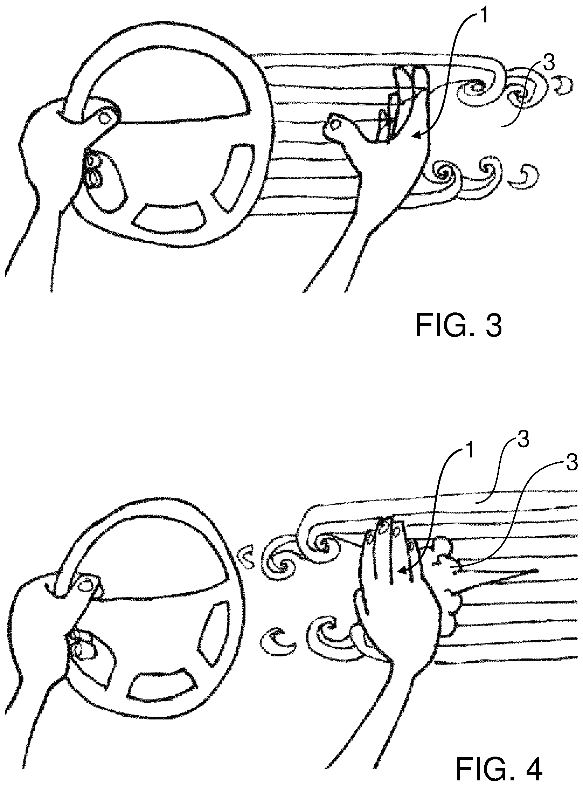

Figur 3 illustriert ein Verfahren zur Anwendung in einem Fahrzeug F gemäß einer anderen Ausführungsform der Erfindung. Das Verfahren dient zur durch Gestensteuerung berührungslosen Bedienung einer Fahrzeugeinrichtung in Form einer Audio-Einrichtung, z. B. Musikabspieleinrichtung, Radio, CD-Player, etc.

Die Bedienperson 2 kann mit einer Gestik 1 z. B. einen Audio-Titel auswählen, vor und/oder zurückspringen. Die Gestik 1 ist z. B. eine Wischgeste mit der ganzen Hand oder einem Finger nach rechts, um einen Audio-Titel nach vorne zu springen.

Dabei kann die Bedienperson 2 während der Wischgeste 1 einen kontinuierlichen Luftstrom 3 als Gegenkraft spüren, mit dem Vorteil, dass die Geste "erfahrbarer" wird und die Bedienperson 2 ein haptisches Feedback 3 während der Gestik 1 erhält.

Am Ende der Gestik 1 bzw. an der Stelle, an der die Funktion ausgelöst wird, kann ein Feedback 3, z. B. in Form eines kurzen Luftstoßes, die Bedienperson 2 darüber informieren, dass ihre Betätigung (Gestik 1) erfolgreich war und die Funktion nun ausgelöst wird.

Des Weiteren kann die Bedienperson 2 als haptisches Feedback 3 einen kontinuierlichen Luftstrom erfahren und an der Stelle, an der die Funktion ausgelöst wird, ein zusätzliches Feedback 3 erhalten. So kann eine Art Kraft-Weg-Verlauf ähnlich dem eines Tasters modelliert werden.

Sofern die Bedienperson 2 zunächst nicht weiß, welche Gestik 1 zur Bedienung der Audio-Einrichtung auszuführen ist, kann sie ihre Hand vor die Audio-Einrichtung halten und beispielsweise über Spracheingabe die Information anfordern, welche Gestik 1 ausgeführt werden kann. Darauf kann die Bedienperson 2 z. B. einen Luftstoß von links und somit eine haptische Information erhalten, um der Bedienperson 2 intuitiv zu zeigen, dass eine Bewegung nach rechts eine mögliche Gestik 1 in diesem Kontext ist (die Hand wird durch den Luftstrom geführt).

Aus den Ausführungsformen der Figuren 1 bis 3 wird ersichtlich, dass zur Erleichterung bzw. Verbesserung der Interaktion mittels Gestik 1 ein zweckmäßig direktes, haptisches Feedback 3 vorzugsweise an die Hand einer Bedienperson 2 darstellbar ist, insbesondere über einen oder mehrere Luftströme, alternativ oder ergänzend aber auch mittels eines Magnetfelds und/oder Temperaturänderungen.

Damit kann während der Betätigung bzw. während der Gestik 1 ein haptisches Feedback 3 gegeben werden (vorzugsweise analog zu der Gegenkraft beim Drücken eines Tasters), ein haptisches Feedback 3 über eine erfolgreiche Ausführung der Gestik 1 bzw. Auslösung und/oder Beendigung der ausgewählten Funktion gegeben werden, und/oder eine Information gegeben werden, welche Gestik 1 im entsprechenden Kontext ausgeführt werden kann.

Die Figuren 4 bis 6 illustrieren insbesondere unterschiedliche haptische Feedbacks 3 an die Hand der Bedienperson 2, die analog ebenfalls für die haptische Informationsübermittlung nutzbar sind. Die haptischen Feedbacks 3 können einzeln oder in Kombination nacheinander und/oder zeitgleich und sich somit überlagernd ausgeführt werden.

Figur 4 z. B. illustriert einen kontinuierlichen Luftstrom als haptisches Feedback 3 und zusätzlich einen Luftstoß als haptisches Feedback 3, so dass sich die zwei Feedbacks 3 zweckmäßig überlagern.

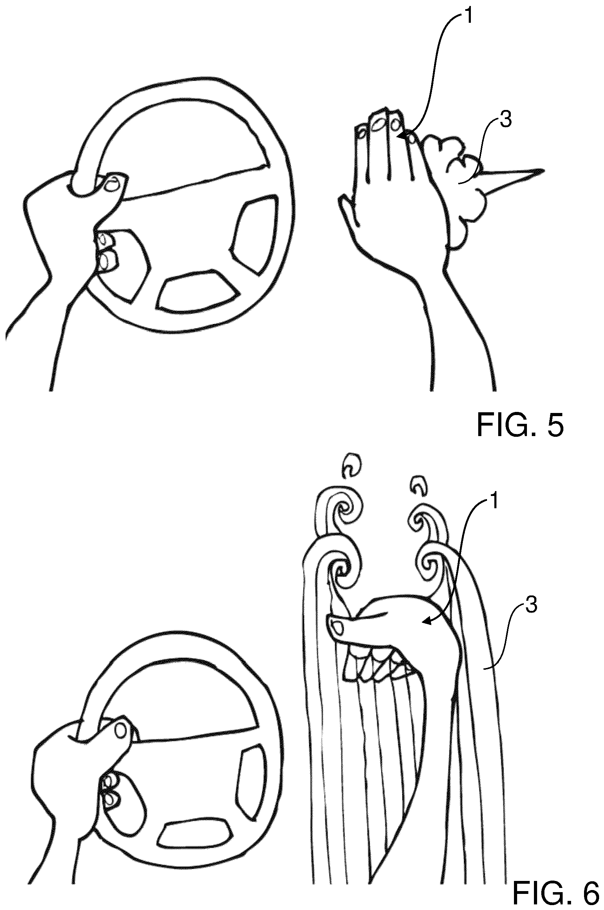

Figur 5 illustriert einen seitlichen Luftstoß 3 als haptisches Feedback 3.

Figur 6 illustriert einen im Wesentlichen senkrechten kontinuierlichen Luftstrom 3 als haptisches Feedback 3.

Im Rahmen der Erfindung sind ebenfalls z. B. Luftströme von vorne nach hinten oder umgekehrt oder schräge Luftströme möglich.

Die haptischen Feedbacks 3, insbesondere der oder die Luftströme, können genutzt werden, um der Bedienperson 2 ein haptisches Feedback 3 zu der Gestik 1 zu vermitteln. Alternativ oder ergänzend kann der Bedienperson 3 haptisch mittels zumindest eines Luftstroms eine Information verschafft werden, welche Gestik 1 zur berührungslosen Betätigung der Fahrzeugeinrichtung auszuführen ist.

Der hierin offenbarte zumindest eine Luftstrom kann genutzt werden, um der Bedienperson 2 ein haptisches Feedback 3 zu der Gestik 1 zu vermitteln und/oder um die Bedienperson 2 darüber zu informieren, welche Gestik 1 zur berührungslosen Betätigung der Fahrzeugeinrichtung auszuführen ist.

Der hierin offenbarte zumindest eine Luftstrom kann als haptisches Feedback 3 zur Führung der Hand der Person während der Gestik 1 und/oder zur haptischen Beeinflussung der Gestik 1 genutzt werden, um korrigierend bzw. hilfestellungleistend in die Betätigung/Gestik einzugreifen.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

Die Erfindung umfasst insbesondere auch folgende Gegenstände:
1. Verfahren zur Anwendung in einem Fahrzeug (F), insbesondere zur über Gestik (1) berührungslosen Bedienung einer Fahrzeugeinrichtung, wobei
   - eine Gestik (1) einer Person (2) zur berührungslosen Betätigung einer Fahrzeugeinrichtung erfasst wird, und
   - zu der Gestik (1) zumindest ein haptisches Feedback (3) für die Person (2) erzeugt wird, vorzugsweise um zumindest einen Teil der Betätigung haptisch zu begleiten, und/oder
   - der Person (2) eine Information haptisch übermittelt wird, welche Gestik (1) zur berührungslosen Betätigung der Fahrzeugeinrichtung auszuführen ist.
2. Verfahren nach Punkt 1, wobei ein haptisches Feedback (3) während der Gestik (1) erfolgt.
3. Verfahren nach Punkt 1 oder 2, wobei ein haptisches Feedback (3) bei Beendigung, nach Beendigung und/oder zu Beginn der Betätigung erfolgt.
4. Verfahren nach einem der vorhergehenden Punkte, wobei ein haptisches Feedback (3) über eine erfolgreiche Ausführung der Betätigung erfolgt.
5. Verfahren nach einem der vorhergehenden Punkte, wobei ein haptisches Feedback (3) einen Kraft-Weg-Verlauf und/oder eine Betätigung eines physischen Bedienelements haptisch imitiert.
6. Verfahren nach einem der vorhergehenden Punkte, wobei ein Luftstrom als haptisches Feedback (3) entgegen der Richtung der Gestik-Bewegung der Person (2) erzeugt wird und/oder wobei ein Luftstrom als haptisches Feedback (3) in Richtung der Gestik-Bewegung der Person (2) erzeugt wird.
7. Verfahren nach einem der vorhergehenden Punkte, wobei ein Luftstrom als haptisches Feedback (3) zur Führung der Hand der Person während der Gestik (1) und/oder zur Beeinflussung der Gestik (1) erfolgt.
8. Verfahren nach einem der vorhergehenden Punkte, wobei ein haptisches Feedback (3) zumindest einen Luftstrom umfasst und vorzugsweise der Luftstrom ausgebildet ist, um einen Kraft-Weg-Verlauf und/oder eine Betätigung eines physischen Bedienelements zu imitieren, und/oder wobei der Luftstrom einen stetigen und/oder variierenden Luftstrom mit zumindest einer Schwelle umfasst.
9. Verfahren nach Punkt 8, wobei der Luftstrom seine Stärke, seine Richtung und/oder seine Temperatur ändert.
10. Verfahren nach einem der vorhergehenden Punkte, wobei ein haptisches Feedback (3) eine Temperaturänderung umfasst und/oder wobei ein haptisches Feedback (3) über zumindest ein Magnetfeld erfolgt.
11. Verfahren nach einem der vorhergehenden Punkte, wobei die Information mittels zumindest eines Luftstroms übermittelt wird, wobei die Information zusätzlich auf einem Display übermittelt wird und/oder über eine akustische Sprachausgabe übermittelt wird.
12. Verfahren nach einem der vorhergehenden Punkte, wobei die Anforderung der Information über eine Gestik (3) und/oder über eine akustische Spracheingabe der Person (2) erfolgt.
13. Verfahren nach einem der vorhergehenden Punkte, wobei zusätzlich zu einem haptischen Feedback (3) ein Geräusch-Feedback, ein Sprachausgabe-Feedback und/oder ein visuelles Feedback erzeugt werden.
14. Vorrichtung für ein Fahrzeug (F), vorzugsweise zur durch Gestik (1) berührungslosen Bedienung einer Fahrzeugeinrichtung und insbesondere zur Durchführung des Verfahrens nach einem der vorhergehenden Punkte, mit
   - einer Einrichtung, ausgeführt, um eine Gestik (1) einer Person (2) zur berührungslosen Betätigung einer Fahrzeugeinrichtung zu erfassen, und
   - einer Einrichtung, ausgeführt, um zu der Gestik (1) zumindest ein haptisches Feedback (3) für die Person (2) zu erzeugen, vorzugsweise so dass zumindest ein Teil der Betätigung haptisch begleitet wird, und/oder
   - einer Einrichtung, ausgeführt, um der Person (2) eine Information haptisch zu übermitteln, welche Gestik (1) zur berührungslosen Betätigung der Fahrzeugeinrichtung auszuführen ist.
15. Fahrzeug, mit einer Vorrichtung nach Punkt 14.

### Bezugszeichenliste

- 1: Gestik, z. B. eine oder mehrere Gesten, insbesondere Hand-/Fingergestik
- 2: Person, z. B. Bedienperson und/oder Fahrzeugführer
- 3: Haptisches Feedback
- F: Fahrzeug

## Patentansprüche

1. Verfahren zur Anwendung in einem Fahrzeug (F), insbesondere zur über Gestik (1) berührungslosen Bedienung einer Fahrzeugeinrichtung, wobei
- eine Gestik (1) einer Person (2) zur berührungslosen Betätigung einer Fahrzeugeinrichtung erfasst wird, und
- der Person (2) eine Information haptisch übermittelt wird, welche Gestik (1) zur berührungslosen Betätigung der Fahrzeugeinrichtung auszuführen ist.

2. Verfahren nach Anspruch 1, wobei zu der Gestik (1) zumindest ein haptisches Feedback (3) für die Person (2) erzeugt wird, vorzugsweise um zumindest einen Teil der Betätigung haptisch zu begleiten, und/oder ein haptisches Feedback (3) während der Gestik (1) erfolgt.

3. Verfahren nach Anspruch 1 oder 2, wobei ein haptisches Feedback (3) bei Beendigung, nach Beendigung und/oder zu Beginn der Betätigung erfolgt.

4. Verfahren nach einem der vorhergehenden Ansprüche, wobei ein haptisches Feedback (3) über eine erfolgreiche Ausführung der Betätigung erfolgt.

5. Verfahren nach einem der vorhergehenden Ansprüche, wobei ein haptisches Feedback (3) einen Kraft-Weg-Verlauf und/oder eine Betätigung eines physischen Bedienelements haptisch imitiert.

6. Verfahren nach einem der vorhergehenden Ansprüche, wobei ein Luftstrom als haptisches Feedback (3) entgegen der Richtung der Gestik-Bewegung der Person (2) erzeugt wird und/oder wobei ein Luftstrom als haptisches Feedback (3) in Richtung der Gestik-Bewegung der Person (2) erzeugt wird.

7. Verfahren nach einem der vorhergehenden Ansprüche, wobei ein Luftstrom als haptisches Feedback (3) zur Führung der Hand der Person während der Gestik (1) und/oder zur Beeinflussung der Gestik (1) erfolgt.

8. Verfahren nach einem der vorhergehenden Ansprüche, wobei ein haptisches Feedback (3) zumindest einen Luftstrom umfasst und vorzugsweise der Luftstrom ausgebildet ist, um einen Kraft-Weg-Verlauf und/oder eine Betätigung eines physischen Bedienelements zu imitieren, und/oder wobei der Luftstrom einen stetigen und/oder variierenden Luftstrom mit zumindest einer Schwelle umfasst.

9. Verfahren nach Anspruch 8, wobei der Luftstrom seine Stärke, seine Richtung und/oder seine Temperatur ändert.

10. Verfahren nach einem der vorhergehenden Ansprüche, wobei ein haptisches Feedback (3) eine Temperaturänderung umfasst und/oder wobei ein haptisches Feedback (3) über zumindest ein Magnetfeld erfolgt.

11. Verfahren nach einem der vorhergehenden Ansprüche, wobei die Information mittels zumindest eines Luftstroms übermittelt wird, wobei die Information zusätzlich auf einem Display übermittelt wird und/oder über eine akustische Sprachausgabe übermittelt wird.

12. Verfahren nach einem der vorhergehenden Ansprüche, wobei die Anforderung der Information über eine Gestik (3) und/oder über eine akustische Spracheingabe der Person (2) erfolgt.

13. Verfahren nach einem der vorhergehenden Ansprüche, wobei zusätzlich zu einem haptischen Feedback (3) ein Geräusch-Feedback, ein Sprachausgabe-Feedback und/oder ein visuelles Feedback erzeugt werden.

14. Vorrichtung für ein Fahrzeug (F), vorzugsweise zur durch Gestik (1) berührungslosen Bedienung einer Fahrzeugeinrichtung und insbesondere zur Durchführung des Verfahrens nach einem der vorhergehenden Ansprüche, mit
- einer Einrichtung, ausgeführt, um eine Gestik (1) einer Person (2) zur berührungslosen Betätigung einer Fahrzeugeinrichtung zu erfassen, und
- einer Einrichtung, ausgeführt, um der Person (2) eine Information haptisch zu übermitteln, welche Gestik (1) zur berührungslosen Betätigung der Fahrzeugeinrichtung auszuführen ist.

15. Vorrichtung nach Anspruch 14, mit einer Einrichtung, ausgeführt, um zu der Gestik (1) zumindest ein haptisches Feedback (3) für die Person (2) zu erzeugen, vorzugsweise so dass zumindest ein Teil der Betätigung haptisch begleitet wird.

16. Fahrzeug, mit einer Vorrichtung nach Anspruch 14 oder 15.
